## Europäisches Patentamt
## European Patent Office
## Office européen des brevets

(19)

(11) Numéro de publication: **0 147 250**
**B1**

(12)

# FASCICULE DE BREVET EUROPEEN

(45) Date de publication du fascicule du brevet:
**14.06.89**

(51) Int. Cl.⁴: **G 21 F 5/00, F 16 K 17/42**

(21) Numéro de dépôt: **84401867.1**

(22) Date de dépôt: **20.09.84**

(54) Enceinte de confinement pour produits dangereux et notamment radioactifs.

(30) Priorité: **22.09.83 FR 8315055**

(43) Date de publication de la demande:
**03.07.85 Bulletin 85/27**

(45) Mention de la délivrance du brevet:
**14.06.89 Bulletin 89/24**

(84) Etats contractants désignés:
**BE DE GB IT**

(56) Documents cités:
**EP-A- 0 031 048**
**FR-A- 2 285 686**
**FR-A- 2 335 762**
**FR-A- 2 368 123**
**GB-A- 810 540**
**US-A- 2 894 478**
**US-A- 3 997 078**

(73) Titulaire: **COMMISSARIAT A L'ENERGIE ATOMIQUE,**
**31/33, rue de la Fédération, F-75015 Paris (FR)**

(72) Inventeur: **Brissier, Raphael, La Gazoute Rue de la**
**Balance, F-33115 Pyla-Sur-Mer (FR)**

(74) Mandataire: **Mongrédien, André et al, c/o**
**BREVATOME 25, rue de Ponthieu, F-75008 Paris (FR)**

ACTORUM AG

# Description

La présente invention a pour objet une enceinte de confinement pour produits dangereux, et notamment pour produits radioactifs, cette enceinte étant équipée d'un ou plusieurs dispositifs d'obturation qui présentent une résistance et une sécurité accrues par rapport aux dispositifs de l'art antérieur.

Les conteneurs de transport assurant le transport de matières radioactives, et en particulier de gaz radioactifs tels que le tritium ou l'hexafluorure d'uranium, sont généralement disposés à l'intérieur d'une enceinte étanche dite «enceinte de confinement». Le rôle de cette dernière est de contenir les gaz qui risquent de s'échapper en cas de mauvaise étanchéité du conteneur. Cette enceinte est munie d'une ou plusieurs vannes permettant de prélever le gaz se trouvant à l'intérieur de l'enceinte de confinement pour déceler une éventuelle fuite du conteneur. Ce contrôle est effectué avant et après le transport. A l'heure actuelle, on utilise des vannes, généralement en acier inoxydable, qui présentent l'inconvénient d'être lourdes, encombrantes et fragiles de par leur conception. Par exemple, certaines de ces vannes pèsent environ 1 kg et ont un encombrement de 145 × 60 × 70 mm. Etant donné leur encombrement et leur fragilité, la manipulation de conteneurs qui en sont équipés nécessite beaucoup de précautions, ce qui rend certaines opérations très délicates, comme par exemple la récupération de conteneurs tombés accidentellement au fond de l'eau. De plus, ces vannes résistent mal aux incendies, en particulier à des températures supérieures à 300 °C, et risquent d'être sérieusement endommagées lors de chocs dépassant 20 m par seconde. Si on peut avantageusement utiliser ce type de vannes dans le transport par voie routière, elles posent des problèmes de sécurité très importants si l'on envisage le transport par voie aérienne.

D'autre part, on connaît par le document US-A-2 894 478 un avertisseur olfactif destiné à prévenir des mineurs d'un danger tel qu'un incendie ou un risque d'explosion. A cet effet, on injecte un fluide odorant dans les conduites d'alimentation en air comprimé des marteaux piqueurs. Le dispositif comprend un réservoir contenant un mélange d'un fluide odorant tel qu'un mercaptan et d'un gaz inerte tel que le fréon. Le réservoir est fermé par une valve à perforation. Cette dernière comporte un opercule présentant une paroi de faible épaisseur qui peut être perforée par un poinçon déplacé au moyen d'un système de vis/écrou. L'obturateur est constitué d'une pièce filetée et taraudée. Il est monté à demeure sur l'enceinte et ne possède pas de moyens d'étanchéité.

Or, dans les années à venir, le transport par voix aérienne va connaître une progression de plus en plus forte: ceci est dû à la rapidité et à la sécurité du transport par avion, mais, en cas d'accident, on risque des chocs avec une vitesse d'impact très importante, nettement supérieure à 20 m par seconde.

La présente invention a justement pour but d'éliminer ces inconvénients grâce à une enceinte de confinement dont la manutention ne nécessite pas autant de précautions que les enceintes de l'art antérieur.

De manière connue, les parois de l'enceinte de confinement objet de l'invention comportent au moins un orifice pour le prélèvement du gaz se trouvant à l'intérieur, cet orifice étant fermé par un dispositif d'obturation, ce dispositif d'obturation comprenant un obturateur apte à fermer ledit orifice et présentant une partie amincie et un désoperculeur, ladite partie amincie pouvant être percée au moyen du désoperculeur. Selon l'invention, le dispositif d'obturation comprend en outre des moyens d'étanchéité assurant l'étanchéité entre l'enceinte et l'obturateur aussi bien avant qu'après le perçage de la partie amincie à l'aide du désoperculeur, et le désoperculeur est un désoperculeur indépendant qui n'est pas monté pendant le transport et que l'on monte sur l'obturateur uniquement pour effectuer le perçage.

L'expression «désoperculeur indépendant» utilisée dans la présente description signifie que le désoperculeur n'est pas fixé en permanence sur l'obturateur comme dans certains dispositifs de l'art antérieur. Le désoperculeur est amené seulement lorsqu'on veut effectuer le prélèvement et on le retire une fois que l'obturateur a été percé: un seul désoperculeur peut servir à percer de nombreux obturateurs.

Dans un mode particulier de réalisation de l'enceinte de confinement objet de l'invention, l'obturateur comprend:

– un logement annulaire pour un joint torique sur sa face en contact avec l'enceinte de confinement,

– un évidement placé sensiblement au centre de ce logement annulaire, et

– un trou taraudé débouchant sur la face de l'obturateur opposée à l'enceinte de confinement, les dimensions et l'emplacement de ce trou taraudé étant tels qu'il soit séparé dudit évidement par une paroi de faible épaisseur constituant la partie amincie de l'obturateur.

Dans le mode de réalisation préféré, l'obturateur est de forme générale cylindrique et comporte une première partie de grand diamètre et une deuxième partie de faible diamètre, la face en contact avec l'enceinte de confinement correspondant à la partie de faible diamètre.

Toujours dans le mode de réalisation préféré, le dispositif comprend des vis pour fixer l'obturateur sur l'enceinte de confinement, des logements étant prévus dans la masse de l'obturateur pour protéger les têtes des vis.

Enfin, l'obturateur peut être réalisé en acier inoxydable ou en tout autre matériau présentant des qualités mécaniques comparables.

L'invention précise les caractéristiques de l'obturateur dans les revendications 7 à 9.

Enfin, l'invention précise les caractéristiques du désoperculeur dans la revendication 10.

L'invention apparaîtra mieux à la lecture de la description qui va suivre, donnée à titre purement illustratif et nullement limitatif, en référence aux dessins annexés, dans lesquels:

- la figure 1 est une vue schématique en coupe verticale d'une caisse de transport contenant une enceinte de confinement conforme à l'invention,

- la figure 2 est une vue schématique en coupe et en perspective d'un obturateur utilisé avec une telle enceinte, et

- la figure 3 est une vue schématique en coupe verticale d'un désoperculeur utilisable pour percer les obturateurs utilisés dans l'invention.

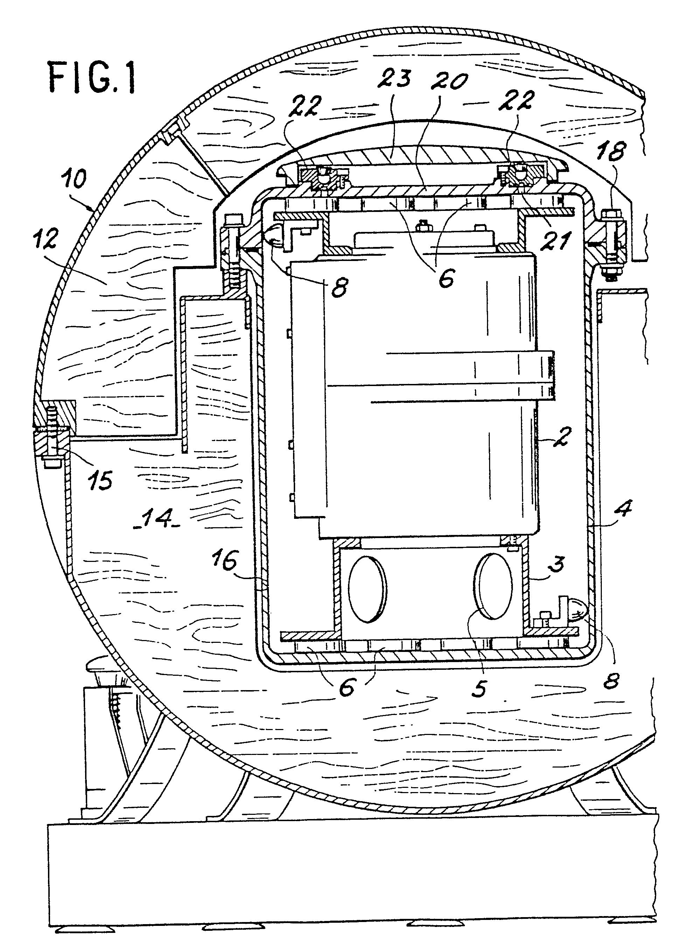

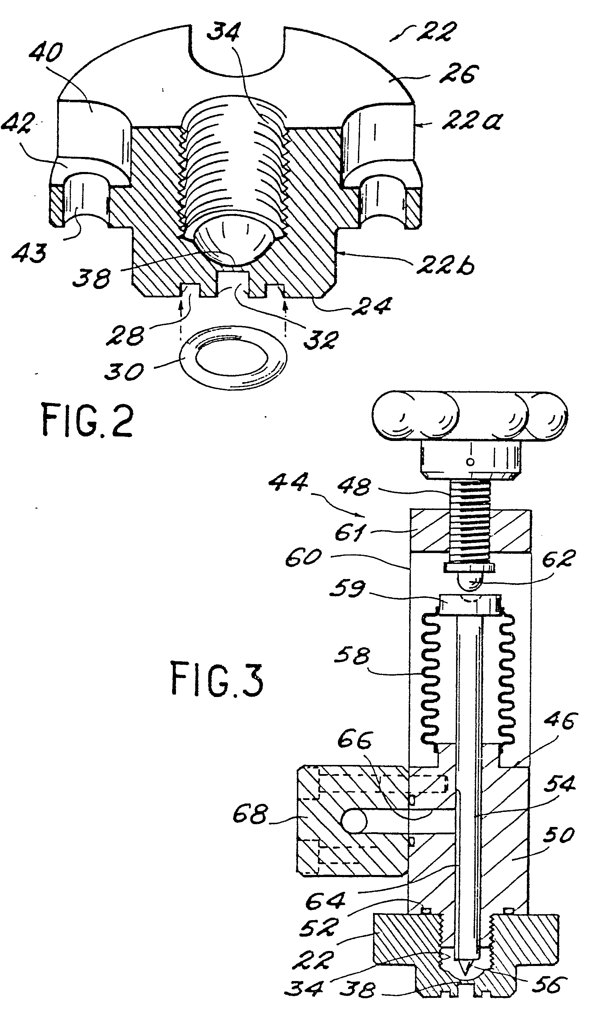

Sur la figure 1, on voit un conteneur 2 placé à l'intérieur d'une enceinte de confinement 4 conforme à l'invention. Le conteneur 2 repose sur la partie inférieure de l'enceinte de confinement par l'intermédiaire d'un support 3 percé d'ouvertures 5 et de plots élastiques 6. La présence des ouvertures 5 permet, en cas de fuite du gaz présent dans le conteneur 2, la circulation de ce gaz dans tout l'espace compris entre le conteneur et l'enceinte de confinement. On voit sur la figure que l'on a prévu d'autres plots élastiques 6 à la partie supérieure du dispositif. On a également prévu des butées latérales telles que 8 pour amortir ou empêcher les mouvements latéraux du conteneur tandis que les plots 6 amortissent les mouvements verticaux. L'enceinte de confinement est placée à l'intérieur d'une caisse de transport 10, généralement en bois, qui se compose d'une partie supérieure 12 et d'une partie inférieure 14 assemblées par des moyens de fixation, par exemple des vis 15. Dans la partie inférieure 14 est prévu un logement 16 pour l'enceinte de confinement 4. Cette dernière est fermée à sa partie supérieure par une paroi ou un couvercle 20 maintenu à l'aide de vis 18 sur la partie inférieure de l'enceinte. Le couvercle 20 est percé de plusieurs orifices fermés par des obturateurs 22 qui seront décrits plus en détail ci-après en référence à la figure 2. Ce sont ces obturateurs qui permettent, au départ et à l'arrivée, le prélèvement du gaz présent dans l'enceinte de confinement. Eventuellement, pour plus de sécurité, on peut prévoir un couvercle 23 qui protège tous les obturateurs 22 pendant le transport.

La figure 2 montre plus en détail la configuration des obturateurs 22 disposés sur le couvercle 20 de l'enceinte de confinement. L'obturateur, de forme générale cylindrique, se compose d'une première partie ou partie supérieure 22a de grand diamètre et d'une deuxième partie ou partie inférieure 22b de plus faible diamètre. L'obturateur 22 présente une face inférieure 24, correspondant à la partie inférieure 22b, qui est destinée à se trouver en contact avec le couvercle de l'enceinte de confinement, tandis que la face supérieure 26 est la face opposée à cette enceinte. Sur la face inférieure 24 est ménagé un logement annulaire 28 pour un joint d'étanchéité torique 30, tandis qu'une cavité ou un évidement 32 est prévu approximativement au centre du logement annulaire 28, c'est-à-dire dans l'axe de symétrie de l'obturateur 22. Un trou taraudé 34 percé à partir de la face supérieure 26 est disposé à peu près suivant l'axe de symétrie de l'obturateur, les dimensions de la cavité 32 et du trou taraudé 34 étant telles qu'ils soient séparés l'un de l'autre par une paroi de faible épaisseur 38 constituant la partie amincie de l'obturateur. L'épaisseur de la partie amincie 38 est généralement inférieure à 1 mm, de préférence de l'ordre de 0,5 mm. Le trou taraudé 34 a pour rôle de permettre la fixation d'un désoperculeur, comme cela sera décrit plus loin en référence à la figure 3.

A titre d'essai, on a réalisé un obturateur en acier inoxydable tel que celui de la figure 2 ayant un diamètre de 44 mm et une hauteur de 20 mm pour un poids de 150 g environ. La paroi 38 avait une épaisseur de 0,5 mm et le joint 30 était métallique. Un tel appareil procure une étanchéité de l'ordre de $10^{-8}$ cm$^3$/atm./s et, malgré la faible épaisseur de la paroi 38, permet de résister à une surpression intérieure de 7 bars et une surpression extérieure de 1,5 bar.

La figure 2 montre encore que l'on a prévu sur le pourtour de la partie supérieure élargie 22a des logements tels que 40 pour les têtes des vis servant à fixer l'obturateur 22 sur le couvercle 20 de l'enceinte de confinement 4. Les têtes des vis reposent sur un rebord 42 prévu à l'intérieur du logement 40, tandis qu'un trou 43 permet le passage du corps de la vis. Cette disposition augmente la sécurité de l'ensemble en mettant les têtes de vis à l'abri d'un choc éventuel, ce qui empêche leur cisaillement. De même, la forme générale de l'obturateur avec deux parties de diamètres différents lui permet d'être mieux maintenu sur le couvercle de l'enceinte de confinement et d'avoir une meilleure résistance au cisaillement en cas de choc.

La figure 3 montre le désoperculeur qui est utilisé pour effectuer un prélèvement de gaz dans l'enceinte de confinement objet de l'invention afin de vérifier s'il y a ou non une fuite. Le désoperculeur, portant la référence générale 44, se compose essentiellement d'un corps 46 et d'une vis de pression 48. Le corps 46 du désoperculeur comprend un bloc métallique 50 dont la partie inférieure a une forme telle qu'il puisse se visser à l'intérieur du trou taraudé 34 prévu dans l'obturateur 22, l'étanchéité étant assurée par un joint annulaire 52. A l'intérieur de la masse métallique 50 est prévu un passage dans lequel peut coulisser longitudinalement une tige 54 se terminant par un pointeau 56. Un soufflet élastique 58, dont une extrémité est solidaire de la masse métallique 50 et l'autre de la tête 59 de la tige 54, pousse celle-ci vers le haut, c'est-à-dire tend à l'éloigner de l'obturateur 22. Le corps 46 du désoperculeur est maintenu par un étrier 60 dont la tête 61 est percée d'un trou taraudé permettant le passage de la vis de pression 48. Cetter dernière porte à sa partie inférieure une bille 62 qui peut pénétrer dans un trou prévu sur la tête 59 de la tige 54 et pousser cette dernière vers le bas à l'encontre de l'action exercée par le soufflet 58 lorsqu'un opérateur tourne la vis de pression 48. On voit encore que le long de la partie inférieure de la tige 54 est prévue une rainure 64 qui permet le passage du gaz venant de l'enceinte de confinement dans un conduit 66 ménagé dans la masse métallique 50, et, de là, dans un raccord 68 relié à un appareil d'analyse (non représenté).

Le fonctionnement du dispositif de la figure 3 est le suivant: lorsqu'on veut prélever un échantillon du gaz présent à l'intérieur de l'enceinte de confinement, on laisse l'obturateur 22 fixé de manière étanche sur le couvercle 20 de l'enceinte 4, et l'on visse le corps du désoperculeur dans le trou taraudé 34, l'étanchéité étant assurée par le joint 52. On manœuvre ensuite la vis de pression 48 pour pousser vers le bas la tige 54 jusqu'à ce que le pointeau 56 perce la paroi amincie 38 prévue dans l'obturateur 22. A ce moment, le gaz présent dans l'enceinte de confinement 4 pénètre dans le trou taraudé 34, puis le long de la rainure 64 et parvient dans le conduit 66 et le raccord 68. Si l'analyse montre qu'il n'y a pas eu de fuite, on peut retirer le désoperculeur et ouvrir l'enceinte de confinement 4. Dans le cas contraire, on envoie celle-ci dans un local où elle subira un traitement particulier.

Il est clair qu'un obturateur tel que 22 ne peut être utilisé qu'une fois, puisqu'on le perce pour effectuer un prélèvement. Cependant, ce sont des appareils peu coûteux du fait de leur petite taille et de leur simplicité de conception qui permet une fabrication en très grande série, donc à un coût modique.

Ainsi, le dispositif d'obturation équipant une enceinte de confinement conforme à l'invention présente des avantages particulièrement intéressants dont le principal est son faible encombrement et son faible poids, ainsi que la simplicité de conception qui permet une bonne tenue sous impact à grande vitesse, et en particulier à des chocs de l'ordre de 60 m par seconde, ce qui correspond à une vitesse d'impact de 400 à 500 km/h sur un sol naturel. D'autre part, il présente une bonne tenue en température, notamment à des températures supérieures à 300 °C, ainsi qu'à des phénomènes de surpression. A titre d'exemple, un obturateur en acier inoxydable tel que celui qui vient d'être décrit peut résister à des surpressions internes (à l'intérieur de l'enceinte de confinement) allant jusqu'à 7 bars et à des surpressions externes allant jusqu'à 1,5 bar. D'autre part, du fait de leur simplicité, on peut prévoir une production en très grande série, ce qui en diminue le coût et rend moins gênant le fait qu'on soit obligé de changer d'obturateur après chaque analyse. Enfin, la manutention d'une enceinte de confinement selon l'invention ne nécessite pas autant de précautions que les enceintes de l'art antérieur puisque les vannes encombrantes et fragiles sont remplacées par des obturateurs de petite taille et très résistants aux chocs. En cas d'accident, la probabilité de rupture de ces obturateurs est très faible et, si l'enceinte est tombée dans un endroit difficile d'accès ou au fond de la mer, on ne risque pas de voir ces obturateurs se rompre au cours des opérations de récupération comme c'est le cas avec les vannes de l'art antérieur.

Enfin, il est bien entendu que l'invention ne se limite pas au seul mode de réalisation qui vient d'être décrit. Par exemple, si, dans le cas de la figure 1, les obturateurs dépassent légèrement la surface du couvercle 20, on peut donner à celui-ci une forme telle que la face supérieure 26 des obturateurs 22 soit dans le même plan que la face supérieure du couvercle ou en-dessous de cette surface. On peut également, pendant le transport, mettre une vis dans le trou taraudé 34, la tête de cette vis étant dans le même plan que la face supérieure 26 afin de rendre celle-ci lisse et continue, cette vis étant retirée juste avant qu'on perce la paroi 38 à l'aide du désoperculeur. Ces dispositions ont pour but de diminuer encore le risque de rupture de l'obturateur en cas de choc. Enfin, un tel obturateur n'est pas utilisable uniquement pour effectuer des prélèvements par perçage à l'aide d'un désoperculeur. On peut les utiliser comme de simples vannes (par exemple sur le conteneur 2 de la figure 1) pour des opérations de vidange ou de transvasement.

**Revendications**

1. Enceinte de confinement et de transport pour produits dangereux et notamment radioactifs, les parois de ladite enceinte (4) comportant au moins un orifice pour le prélèvement du gaz se trouvant à l'intérieur, un dispositif d'obturation pour fermer cet orifice, ce dispositif d'obturation comprenant un obturateur (22) apte à fermer ledit orifice et présentant une partie amincie (38) et un désoperculeur (44), ladite partie amincie pouvant être percée au moyen du désoperculeur (44), caractérisée en ce que le dispositif d'obturation comprend en outre des moyens d'étanchéité assurant l'étanchéité entre l'enceinte (4) et l'obturateur (22) aussi bien avant qu'après le perçage de la partie amincie (38) à l'aide dudit désoperculeur (44) et en ce que le désoperculeur (44) est un désoperculeur indépendant qui n'est pas monté pendant le transport et que l'on monte sur l'obturateur (22) uniquement pour effectuer le perçage.

2. Enceinte de confinement selon la revendication 1, caractérisée en ce que lesdits moyens d'étanchéité comprennent un joint torique (30).

3. Enceinte de confinement selon l'une quelconque des revendications 1 et 2, caractérisée en ce que l'obturateur (22) comprend:
   – un logement annulaire (28) pour un joint torique (30) sur sa face (24) en contact avec l'enceinte de confinement (4),
   – un évidement (32) placé sensiblement au centre de ce logement annulaire (28), et
   – un trou taraudé (34) débouchant sur la face (26) de l'obturateur (22) opposée à ladite enceinte de confinement (4), les dimensions et l'emplacement de ce trou taraudé (34) étant tels qu'il soit séparé dudit évidement (32) par une paroi de faible épaisseur (38) constituant la partie amincie de l'obturateur.

4. Enceinte de confinement selon l'une quelconque des revendications 1 à 3, caractérisée en ce que ledit obturateur (22) est de forme générale cylindrique et comporte une première partie (22a) de grand diamètre et une deuxième partie (22b) de faible diamètre, la face (24) en contact avec l'enceinte de confinement (4) correspondant à la partie de faible diamètre (22b).

5. Enceinte de confinement selon l'une quelconque des revendications 1 à 4, caractérisée en ce que le dispositif d'obturation comprend en outre des vis pour fixer l'obturateur (22) sur l'enceinte de confinement (4), des logements (40) étant prévus dans la masse de l'obturateur (22) pour protéger les têtes des vis.

6. Enceinte de confinement selon l'une quelconque des revendications 1 à 5, caractérisée en ce que ledit obturateur (22) est en acier inoxydable.

7. Enceinte de confinement selon l'une quelconque des revendications 1 à 6, caractérisée en ce que l'obturateur (22) est de forme générale cylindrique et comporte une première partie (22a) de grand diamètre et une deuxième partie (22b) de faible diamètre, la face (24) en contact avec l'enceinte de confinement (4) correspondant à la partie de faible diamètre (22b).

8. Enceinte de confinement selon la revendication 7, caractérisée en ce que l'obturateur (22) comporte des trous (43) pour le passage de vis et des logements (40) prévus dans la masse de l'obturateur (22) pour protéger les têtes de vis.

9. Enceinte de confinement selon l'une quelconque des revendications 7 ou 8, caractérisée en ce que l'obturateur (22) est réalisé en acier inoxydable.

10. Enceinte de confinement selon l'une quelconque des revendications 7 à 9, caractérisée en ce que le désoperculeur (44) comprend:
– un corps de désoperculeur (46) comportant un bloc métallique (50) apte à être fixé sur ledit obturateur (22),
– une tige métallique (54) coulissante dans un passage prévu à l'intérieur du bloc métallique (50), cette tige (54) ayant un pointeau (56) à son extrémité inférieure,
– une vis de pression (48) indépendante de la tige (54) et pouvant agir sur l'extrémité supérieure de ladite tige (54),
– un conduit (66) ménagé dans le bloc métallique (50) et faisant communiquer le passage pour la tige (54) avec l'extérieur,
– des moyens d'étanchéité (52) entre le corps de désoperculeur (46) et l'obturateur (22);
– un soufflet élastique (58) reliant l'extrémité supérieure de la tige métallique (54) àudit bloc métallique (50), et
– une rainure longitudinale (64) ménagée dans la partie inférieure de ladite tige (54).

## Claims

1. Containment and transportation shell for dangerous and in particular radioactive products, the walls of the said shell (4) having at least one orifice for the sampling of the gas inside, a sealing device for closing this orifice, this sealing device comprising a seal (22) suitable for closing the said orifice and having a narrowed part (38) and a rupturing device (44), it being possible for the said narrowed part to be perforated by means of the rupturing device (44), characterized in that the sealing device also comprises leaktight means providing leaktightness between the shell (4) and the seal (22) both before and after perforation of the narrowed part (38) using the said rupturing device (44), and in that the rupturing device (44) is an independent rupturing device which is not mounted during transportation and which is mounted on the seal (22) only in order to effect perforation.

2. Containment shell according to Claim 1, characterized in that the said leaktight means comprise an O-ring (30).

3. Containment shell according to either one of Claims 1 and 2, characterized in that the seal (22) comprises:
– an annular housing (28) for an O-ring (30) on its face (24) which is in contact with the containment shell (4),
– a recess (32) located substantially in the centre of this annular housing (28), and
– a tapped hole (34) opening onto the face (26) of the seal (22) which is opposite the said containment shell (4), the dimensions and the location of this tapped hole (34) being such that it is separated from the said recess (32) by a wall of small thickness (38) forming the narrowed part of the seal.

4. Containment shell according to any one of Claims 1 to 3, characterized in that the said seal (22) is generally cylindrical in shape and has a first part (22a) of large diameter and a second part (22b) of small diameter, the face (24) which is in contact with the containment shell (4) corresponding to the part of small diameter (22b).

5. Containment shell according to any one of Claims 1 to 4, characterized in that the sealing device also comprises screws for fixing the seal (22) on the containment shell (4), seats (40) being provided in the body of the seal (22) in order to protect the screw heads.

6. Containment shell according to any one of Claims 1 to 5, characterized in that the said seal (22) is made from stainless steel.

7. Containment shell according to any one of Claims 1 to 6, characterized in that the seal (22) is generally cylindrical in shape and has a first part (22a) of large diameter and a second part (22b) of small diameter, the face (24) which is contact with the containment shell (4) corresponding to the part of small diameter (22b).

8. Containment shell according to Claim 7, characterized in that the seal (22) has holes (43) for the passage of screws and seats (40) provided in the body of the seal (22) in order to protect the screw heads.

9. Containment shell according to either one of Claims 7 or 8, characterized in that the seal (22) is made of stainless steel.

10. Containment shell according to any one of Claims 7 to 9, characterized in that the rupturing device (44) comprises:
– a rupturing device body (46) having a metal block (50) suitable for fixing on the said seal (22),

– a metal rod (54) sliding in a passage provided inside the metal block (50), this rod (54) having a centre punch (56) at its lower end,

– a pressure screw (48) independent of the rod (54) and capable of acting on the upper end of the said rod (54),

– a channel (66) provided in the metal block (50) and enabling the passage for the rod (54) to communicate with the outside,

– leaktight means (52) between the rupturing device body (46) and the seal (22);

– an elastic bellows (58) connecting the upper end of the metal rod (54) to the said metal block (50) and

– a longitudinal groove (64) provided in the lower part of the said rod (54).

## Patentansprüche

1. Umschließungs- und Transportbehälter für gefährliche, insbesondere radioaktive Produkte, dessen Wände wenigstens eine Öffnung für den Abzug von Gas aufweisen, das sich im Innern befindet, mit einer Verschließeinrichtung zum Verschließen dieser Öffnung, enthaltend einen Verschluß (22), der dazu eingerichtet ist, die genannte Öffnung zu verschließen, und eine dünne Stelle (38) aufweist, und eine Öffnungseinrichtung (44), wobei die genannte dünne Stelle mittels der Öffnungseinrichtung (44) durchstoßen werden kann, dadurch gekennzeichnet, daß die Verschließeinrichtung weiterhin Dichtungseinrichtungen aufweist, die die Abdichtung zwischen dem Behälter (4) und dem Verschluß (22) sowohl vor als auch nach dem Durchstoßen der dünnen Stelle (38) mittels der Öffnungseinrichtung (44) sicherstellen, und daß die Öffnungseinrichtung (44) eine unabhängige Öffnungseinrichtung ist, die während des Transports nicht montiert ist und die man an dem Verschluß (22) ausschließlich zur Ausführung der Durchstoßung anbringt.

2. Umschließungsbehälter nach Anspruch 1, dadurch gekennzeichnet, daß die genannten Dichtungseinrichtungen einen O-Ring (30) aufweisen.

3. Umschließungsbehälter nach einem der Ansprüche 1 und 2, dadurch gekennzeichnet, daß der Verschluß (22) enthält:

eine ringförmige Aufnahme (28) für einen O-Ring (30) an seiner mit dem Umschließungsbehälter (4) in Berührung stehenden Fläche (24),

eine Ausnehmung (32) im wesentlichen in der Mitte dieser ringförmigen Aufnahme (28), und

eine Gewindebohrung (34), die auf der Seite (26) des Verschlusses (22) mündet, die dem Umschließungsbehälter (4) abgewandt ist, wobei die Abmessungen und die Lage der Gewindebohrung (34) derart sind, daß sie von der genannten Ausnehmung (32) durch eine Wand (38) geringer Dikke getrennt ist, die die dünne Stelle des Verschlusses bildet.

4. Umschließungsbehälter nach einem der Ansprüche 1 bis 3, dadurch gekennzeichnet, daß der genannte Verschluß (22) im wesentlichen zylindrisch ist und einen ersten Abschnitt (22a) großen Durchmessers und einen zweiten Abschnitt (22b) kleinen Durchmessers aufweist, wobei die mit dem Umschließungsbehälter (4) in Berührung stehende Fläche (24) dem Abschnitt (22b) kleinen Durchmessers entspricht.

5. Umschließungsbehälter nach einem der Ansprüche 1 bis 4, dadurch gekennzeichnet, daß die Verschließeinrichtung weiterhin Schrauben aufweist, um den Verschluß (22) auf dem Umschließungsbehälter (4) zu befestigen, wobei Aufnahmen (40) im Körper des Verschlusses (22) vorgesehen sind, um die Köpfe der Schrauben zu schützen.

6. Umschließungsbehälter nach einem der Ansprüche 1 bis 5, dadurch gekennzeichnet, daß der genannte Verschluß (22) aus Edelstahl besteht.

7. Umschließungsbehälter nach einem der Ansprüche 1 bis 6, dadurch gekennzeichnet, daß der Verschluß (22) von im wesentlichen zylindrischer Form ist und einen ersten Abschnitt (22a) großen Durchmessers und einen zweiten Abschnitt (22b) kleinen Durchmessers aufweist, wobei die mit dem Umschließungsbehälter (4) in Berührung stehende Fläche (24) dem Abschnitt (22b) kleinen Durchmessers entspricht.

8. Umschließungsbehälter nach Anspruch 7, dadurch gekennzeichnet, daß der Verschluß (22) drei Löcher (43) für den Durchgang von Schrauben sowie Aufnahmen (40) im Körper des Verschlusses (22) aufweist, um die Köpfe der Schrauben zu schützen.

9. Umschließungsbehälter nach einem der Ansprüche 7 oder 8, dadurch gekennzeichnet, daß der Verschluß (22) aus Edelstahl besteht.

10. Umschließungsbehälter nach einem der Ansprüche 7 bis 9, dadurch gekennzeichnet, daß die Öffnungseinrichtung (44) enthält:

einen Öffnungskörper (46), umfassend einen metallischen Block (50), der dazu eingerichtet ist, auf dem Verschluß (22) befestigt zu werden,

einen Metallstab (54), der in einem Durchgang gleitet, der im Innern des metallischen Blocks (50) vorgesehen ist, wobei dieser Stab (54) eine Spitze (56) an seinem unteren Ende aufweist,

eine Druckschraube (48), die unabhängig von dem Stab (54) ist und auf das obere Ende des genannten Stabes (54) einwirken kann,

eine Leitung (66), die in dem metallischen Block (50) ausgebildet ist und den Durchgang für den Stab (54) mit der äußeren Umgebung verbindet,

eine Dichtungseinrichtung (52) zwischen dem Öffnungskörper (46) und dem Verschluß (22),

einen elastischen Balg (58), der das obere Ende des Metallstabes (54) mit dem metallischen Block (50) verbindet, und

eine Längsrille (64), die im unteren Abschnitt des genannten Stabes (54) ausgebildet ist.

# FIG.1

FIG.2

FIG.3